# EUROPÄISCHE PATENTANMELDUNG

(11) **EP 2 535 567 A2**
(43) Veröffentlichungstag der Anmeldung: **19.12.2012**
(21) Anmeldenummer: 12153597.5
(22) Anmeldetag: 02.02.2012
(51) Int. Cl.: F03D 7/02

(54) **Verfahren zur Steuerung der Pitchwinkelverstellung eines Rotorblattes einer Windkraftanlage**

(30) Priorität: 16.05.2011 EP 11166156
(71) Anmelder: Siemens Aktiengesellschaft, 80333 München (DE)
(72) Erfinder: Ladra, Uwe, 91056 Erlangen (DE); Schäfers, Elmar, 90763 Fürth (DE); Steinigeweg, Rolf-Jürgen, 91074 Herzogenaurach (DE)

(57) **Zusammenfassung**

Um die Schwingungsanfälligkeit der Rotorblatter einer Windkraftanlage bei der Turmschattenkompensation zu begrenzen, wird vorgeschlagen, die Sollwertverläufe der Pitchwinkelverstellung mit Hilfe eines Optimalsteuerungsverfahrens zu ermitteln.

## Beschreibung

Die Erfindung betrifft Verfahren zur Steuerung eines motorischen Antriebs zum Verstellen des Pitchwinkels eines Rotorblattes einer Windkraftanlage zum Zweck der Turmschattenkompensation. Darüber hinaus betrifft die Erfindung eine Recheneinheit zur Durchführung des Verfahrens, ein Antriebssteuergerät mit einer solchen Recheneinheit, eine Windkraftanlage mit wenigstens einem derartigen Antriebssteuergerät sowie ein Computerprogramm.

Windkraftanlagen dienen der Umwandlung kinetischer Energie von Wind mittels eines Rotors in elektrische Energie. Die Rotorblätter von Windkraftanlagen, die auch als Flügel bezeichnet werden, weisen ein aerodynamisches Profil auf, das einen Druckunterschied hervorruft, aus dem ein auf den Rotor wirkendes Drehmoment resultiert, das die Geschwindigkeit des Rotors beeinflusst.

Windkraftanlagen und Funktionselemente von Windkraftanlagen, insbesondere Flügel, neigen bauartbedingt zu Schwingungen. Das Schwingungsverhalten wird dabei durch mindestens eine Eigenfrequenz charakterisiert. Diese Eigenfrequenz wird in der Regel durch Positionier- bzw. Hochlaufvorgänge angeregt, was zu unerwünschten Schwingungen des zu verfahrenden Systems und zu einer erhöhten Belastung der Konstruktion führt.

Bei Windenergieanlagen besteht die Forderung nach einer möglichst konstanten Leistung des Windrades. Hierzu ist eine möglichst konstante Drehzahl notwendig. Um dies zu erreichen, wird bei Windstärkeänderungen der Pitchwinkel der Rotorblätter entsprechend nachgeführt. Durch eine Verstellung der Anstellwinkel der Rotorblätter werden die Strömungsgeschwindigkeitsunterschiede zwischen Saug- und Druckseite der Rotorblätter verändert. Beispielsweise kann ein Verschwenken des Rotorblattes um einen Pitchwinkel bis maximal 90° erfolgen, je nach Windstärke, so dass das Rotorblatt bei wenig Wind viel Angriffsfläche und bei viel Wind wenig Angriffsfläche zur Verfügung stellt. Das Nachführen des Pitchwinkels in Abhängigkeit von der Windstärke ist ein relativ langsamer Vorgang, bei dem kaum Schwingungen angeregt werden. Zur Rotorblattverstellung weisen Windkraftanlagen Pitch-Antriebssysteme auf. Die Rotorblattverstellung erfolgt z. B. über hydraulisch betätigte Zylinder oder aber einen Elektro- bzw. Getriebemotor.

Die umlaufenden Rotorblatter einer Windenergieanlage kommen beim Passieren des Turmes in dessen Windschatten, so dass der gleichbleibende Umlauf der Flügel negativ beeinflusst wird. Um diesen Effekt zu kompensieren, soll jeder Flügel bei der so genannten "Turmschattenkompensation" einmal je Umlauf beim Passieren des Turmes über den Pitchantrieb in Abhängigkeit von der Windgeschwindigkeit und der Aerodynamik des Turms verstellt werden. Eine derartige Verstellung muss hochdynamisch erfolgen. Während das Rotorblatt beim Umlauf den Turmschatten passiert, wird der Pitchwinkel um beispielsweise 0,5° bis 3,0° verstellt und anschließend gleich wieder zurückgeführt. Bei gegenwärtig üblichen Rotorumlaufdrehzahlen von beispielsweise 18 U/min muss dies innerhalb einer Zeitdauer von ca. 100 ms erfolgen. Bei diesen hochdynamischen Vorgängen kann es zur Anregung von Schwingungen des Rotorblattes kommen.

Während das Problem des hierfür verwendbaren dynamischen Pitchantriebs derzeit vorzugsweise dadurch gelöst wird, dass getriebelose Direktantriebe verwendet werden, ist das Problem der Schwingungsanfälligkeit der Windflügel bisher ungelöst. Es wird bisher versucht, die Schwingungsanfälligkeit der Rotorblatter durch konstruktive Maßnahmen zu begrenzen. Dies hat jedoch noch nicht zu dem gewünschten Erfolg geführt.

Eine Aufgabe der vorliegenden Erfindung ist es, die Schwingungsanfälligkeit der Rotorblatter einer Windkraftanlage bei der Turmschattenkompensation zu begrenzen. Diese Aufgabe wird durch die in den unabhängigen Patentansprüchen angegebenen Erfindungsgegenstände gelöst. Vorteilhafte Weiterbildungen sind Gegenstand der Unteransprüche sowie der nachfolgenden Beschreibung.

Die im Folgenden im Zusammenhang mit dem Verfahren erläuterten Vorteile und Ausgestaltungen gelten sinngemäß auch für die entsprechenden Vorrichtungen und umgekehrt.

Eine Grundidee der Erfindung ist es, die Schwingungsanfälligkeit der Rotorblatter durch steuerungs- bzw. regelungstechnische Maßnahmen zu begrenzen. Erfindungsgemäß wird in einem Verfahren zur Steuerung eines motorischen Antriebs zum Verstellen des Pitchwinkels eines Rotorblattes einer Windkraftanlage zum Zweck der Turmschattenkompensation vorgeschlagen, mit Hilfe eines Optimalsteuerungsverfahrens die Sollwertverläufe der Pitchwinkelverstellung derart zu ermitteln, dass das Rotorblatt möglichst wenig zu Schwingungen angeregt wird. Damit werden unerwünschte Schwingungen der Rotorblätter durch die Pitchverstellung bzw. während der Pitchverstellung minimiert. Eine solche möglichst schwingungsarme Pitchverstellung führt zu einer Verringerung der mechanischen Belastung sowohl der Windflügel, als auch der Windkraftanlage insgesamt. Die vorliegende Erfindung findet besonders vorteilhaft Anwendung bei der Bereitstellung einer schwingungsarmen dynamischen Einzelblattverstellung.

Das Durchführen des Optimalsteuerungsverfahrens kann dabei auf verschiedene Art und Weise erfolgen. Wesentlich ist, dass die Führungsgrößengenerierung für die optimierte Pitchwinkelverstellung auf die Lösung eines Optimalsteuerungsproblems zurückgeführt wird, welches mit numerischen Methoden lösbar ist. Die Durchführung dieser Verfahren im einzelnen ist dem Fachmann bekannt und bedarf daher an dieser Stelle keiner weiteren Erläuterung. Nur beispielhaft sei verwiesen auf die Druckschrift DE 10 2005 036 848 A1, deren Beschreibung Bestandteil der Offenbarung der vorliegenden Patentanmeldung ist.

Die Anwendung eines Optimalsteuerungsverfahrens ist besonders geeignet, da mit dieser Methode optimierte Bewegungs- bzw. Verfahrprofile der Rotorblätter besonders schnell und effizient ermittelt werden können. Dabei erfolgt die Ermittlung eines zu einer optimierten Pitchwinkelverstellung geeigneten Lageverlaufs und/oder eines geeigneten Momentenverlaufs und/oder eines geeigneten Geschwindigkeitsverlaufs. Der solchermaßen bestimmte Sollwertverlauf wird anschließend einem Antriebssteuergerät zur Pitchwinkelverstellung zur Verfügung gestellt. Der Sollwertverlauf kann auch als Führungs-und/oder Steuergröße in einem Regelkreis zur Pitchwinkelverstellung dienen.

Je höher die Rotorumlaufdrehzahlen sind, desto dynamischer muss diese Turmschattenkompensation erfolgen. Das bedeutet, dass sich die Sollwertverläufe in Abhängigkeit von der Drehzahl ändern. Demzufolge erfolgt die Optimalsteuerung in einer bevorzugten Ausführungsform der Erfindung mit der Drehzahl als veränderlichem Parameter. Man erhält somit Bewegungsprofile für verschiedene Drehzahlen und somit für verschiedene Windgeschwindigkeiten. Es entsteht eine Art drehzahlabhängiges Kennlinienfeld, das in einem Speicher abgelegt und nach Bedarf wieder ausgelesen wird. Alternativ zu dieser Ausführungsform der Erfindung, bei der das Optimalsteuerungsverfahren im Vorfeld ("offline") durchgeführt und ein passender Sollwertverlauf in Abhängigkeit von der aktuellen Umlaufdrehzahl gewählt wird, kann es vorgesehen sein, die Sollwertverläufe während des laufenden Betriebs der Windkraftanlage, quasi in Echtzeit ("online") zu ermitteln.

Eine Berechnung der Sollwertverläufe während des Betriebs der Windkraftanlage ist besonders dann sinnvoll, wenn es gemäß einer weiteren Ausführungsform der Erfindung vorgesehen ist, den Pitchantrieb in Abhängigkeit von sich dynamisch ändernden Resonanzfrequenzen anzusteuern. Dabei werden die Sollwertverläufe in Abhängigkeit von einem Betriebsparameter dynamisch angepasst, beispielsweise in Abhängigkeit von der Umgebungstemperatur, die über temperaturabhängig veränderbare Materialeigenschaften ebenfalls Einfluss auf die Eigenfrequenzen des Flügels hat. Auch in diesem Fall werden bei der Berechnung der Sollwertverläufe die Windgeschwindigkeit bzw. die damit verbundenen Belastung des Flügels berücksichtigt.

In Abhängigkeit von dem Typ der Windkraftanlage werden zudem die Aerodynamik des Turmes bzw. die sich daraus ergebenden Eigenschaften des Turmschattens berücksichtigt. So kann der Bereich, in dem eine Turmschattenkompensation notwendig ist, in Abhängigkeit von Turmtyp variieren. Mit anderen Worten wird für die Optimalsteuerung eines bestimmten Typs einer Windkraftanlage ein von dem Turmtyp abhängiger Parameter berücksichtigt, der sich im laufenden Betrieb nicht ändert.

Wesentlich bei der Anwendung des Optimalsteuerungsverfahrens ist, dass durch entsprechend angepasste Sollwertverläufe eine Anregung der dominierenden Eigenfrequenz des Flügels vermieden wird. In einer bevorzugten Ausführungsform der Erfindung wird das Optimalsteuerungsverfahren zugleich derart ausgeführt, dass die Pitchwinkelverstellung möglichst schnell erfolgt. Mit anderen Worten soll die Pitchverstellung nicht nur möglichst schwingungsarm, sondern auch schnellstmöglich erfolgen. In einer weiteren bevorzugten Ausführungsform der Erfindung wird das Optimalsteuerungsverfahren zugleich derart ausgeführt, dass die Umlaufdrehzahl des Rotors möglichst konstant bleibt, so dass keine Einbußen bei der Energiegewinnung auftreten. Aus einer möglichst konstanten Drehzahl resultiert zugleich möglichst konstante Lagerkräften, so dass der zu erwartende mechanische Verschleiß minimal ist. In weiteren bevorzugten Ausführungsformen der Erfindung wird das Optimalsteuerungsverfahren daher zugleich derart ausgeführt, dass die am Pitchlager des Rotorblattes bzw. die am Lager des Rotors wirkenden Kräfte möglichst konstant sind.

Durch die Erfindung wird darüber hinaus eine Recheneinheit bereitgestellt, die zur Durchführung des erfindungsgemäßen Verfahrens eingerichtet ist. Die Recheneinheit ist insbesondere zur Berechnung der Sollwertverläufe mit Hilfe des Optimalsteuerungsverfahrens und/oder zur Speicherung der berechneten Sollwertverläufe und/oder zum Auslesen bzw. Bereitstellen der berechneten Sollwertverläufe eingerichtet.

Außerdem stellt die Erfindung ein Antriebssteuergerät bereit, das eine solche Recheneinheit aufweist und das zur Durchführung des oben beschriebenen Verfahrens eingerichtet ist. Schließlich wird eine Windkraftanlage vorgeschlagen, die sich dadurch auszeichnet, dass jedes Rotorblatt der Windkraftanlage einen motorischen Antrieb zum Verstellen des Pitchwinkels des Rotorblattes aufweist, wobei wenigstens ein Antriebssteuergerät, wie oben beschrieben, vorgesehen ist. Besonders vorteilhaft für eine rotorblattindividuelle Pitchwinkelverstellung ist es, wenn jedem dieser Antriebe ein separates Antriebssteuergerät zugeordnet ist.

Zudem schlägt die Erfindung ein Computerprogramm vor. Das Computerprogramm umfasst Computerprogrammanweisungen zum Durchführen aller Schritte eines solchen Verfahrens, wenn das Computerprogramm auf einem Computer oder einer entsprechenden Recheneinheit ausgeführt wird. Der Computer bzw. die Recheneinheit ist zu diesem Zweck zur Durchführung des beschriebenen Verfahrens ausgebildet, insbesondere zur Durchführung aller Schritte entsprechend des beschriebenen Verfahrens, die in einem Zusammenhang mit der Verarbeitung von Daten stehen. Die Recheneinheit weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß dem beschriebenen Verfahren. Bei den Funktionsmodulen kann es sich um Hardwaremodule oder Softwaremodule handeln. Mit anderen Worten kann die Erfindung, soweit es die Recheneinheit betrifft, entweder in Form von Computerhardware oder in Form von Computersoftware oder in einer Kombination aus Hardware und Software verwirklicht werden. Soweit die Erfindung in Form von Software, also als Computerprogramm, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
- FIG 1: das zeitliche Verhalten einer Pitchverstellung P um ca. 2° ohne Optimalsteuerung,
- FIG 2: das zeitliche Verhalten einer daraus resultierenden Flügelauslenkung L,
- FIG 3: das zeitliche Verhalten einer Pitchverstellung P um ca. 2° mit Optimalsteuerung,
- FIG 4: das zeitliche Verhalten einer daraus resultierenden Flügelauslenkung L,
- FIG 5: eine schematische Darstellung von Teilen einer Windkraftanlage.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

An dem Rotor einer Windkraftanlage sind eine Anzahl von Flügeln angebracht. Die niedrigsten Eigenfrequenzen eines solchen Flügels, der beispielsweise etwa 40 m lang ist und am Lager einen Durchmesser von etwa 2 m aufweist, liegen um 1 Hz.

Beim Betrieb von Windkraftanlagen kommt der Pitchverstellung eine große Bedeutung zu. Einerseits werden die Flügel durch eine Verstellung des Pitch im Wind ausgerichtet, wodurch die Flügelstellung ständig den aktuellen Windgegebenheiten angepasst wird, um die Windbelastung auf das Rotorblatt und damit die daraus resultierende Drehzahl möglichst konstant zu halten mit dem Ziel, eine möglichst konstante Leistung der Windkraftanlage bereitzustellen. Andererseits sollen die Flügel bei der Turmschattenkompensation einmal je Umlauf beim Passieren des Turmes über den Pitchantrieb dynamisch zwischen 0,5° und 3° in Abhängigkeit von der Windgeschwindigkeit und der Aerodynamik des Turms verstellt werden, um damit den Windschatten des Turmes zu kompensieren.

Beim Verstellen der Flügel mit Hilfe des Pitchantriebs werden jedoch Resonanzfrequenzen der Flügel angeregt, die zu starken Schwingungen führen können. Dabei wird einerseits aufgrund der Drehbewegung eine Torsionsschwingung angeregt. Andererseits werden aufgrund der Überkopplung auch Biegeschwingungen des Flügels, der sogenannte Flügelschlag, also die Biegung um die lange, weiche Seite, angeregt. Auftreten kann auch eine Biegung um die kurze, steife Seite. Hinzu kommen die Oberwellen dieser Eigenfrequenzen. Die Frequenz des Flügelschlags beträgt dabei beispielsweise etwa 1 Hz und die Torsionsfrequenz etwa 10 Hz, wobei beide Werte je nach Ausführung und Bauart der Windkraftanlage variieren können.

Das bedeutet, dass bei einer Verstellung des Pitchwinkels durch die Drehbewegung am Pitchlager der Flügel mit den beschriebenen Eigenfrequenzen immer zu Schwingungen angeregt wird, was zu einer erhöhten Belastung der mechanischen Struktur führt. Diese ständig wiederkehrenden dynamischen Wechsellasten können zur Ermüdung des Materials sowie schlimmstenfalls zum Bruch der Laminatstruktur des Flügels führen.

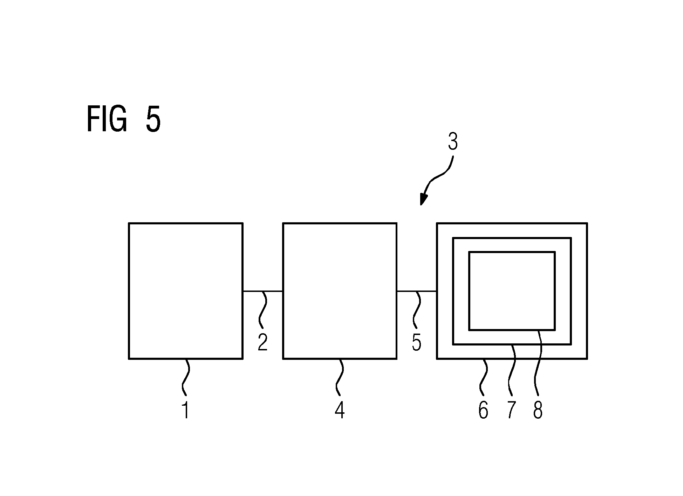

Mit der vorliegenden Erfindung können Schwingungen der Flügel bei einer Verstellung des Pitchwinkels minimiert oder sogar vollständig verhindert werden. Hierzu dient beispielsweise eine optimierte Geschwindigkeits- oder Drehzahlführung der Pitchverstellung der Flügel 1 der Windkraftanlage. Für die Pitchverstellung ist jeder Flügel 1 über Verbindungselemente 2 mit einem motorischen Pitchantrieb 3 verbunden. Jeder Pitchantrieb 3 umfasst einen Motor 4 und ein mit dem Motor 4 über eine Steuerleitung 5 verbundenes Antriebssteuergerät 6, das zur Ansteuerung des Pitchantriebs 3, speziell zur Steuerung von Positionier- bzw. Hochlaufvorgängen der Pitchverstellung ausgebildet ist. Zu diesem Zweck umfasst jedes Antriebssteuergerät 6 eine Recheneinheit 7. Diese Recheneinheit 7 ist zur Durchführung des beschriebenen Verfahrens, insbesondere zur Berechnung der Sollwertverläufe mit Hilfe eines Optimalsteuerungsverfahrens und/oder zur Speicherung der berechneten Sollwertverläufe und/oder zum Auslesen bzw. Bereitstellen der berechneten Sollwertverläufe ausgebildet. In der Recheneinheit 7 wird ein Computerprogramm 8 mit Computerprogrammanweisungen zum Durchführen aller Schritte des beschriebenen Verfahrens ausgeführt, siehe FIG 5.

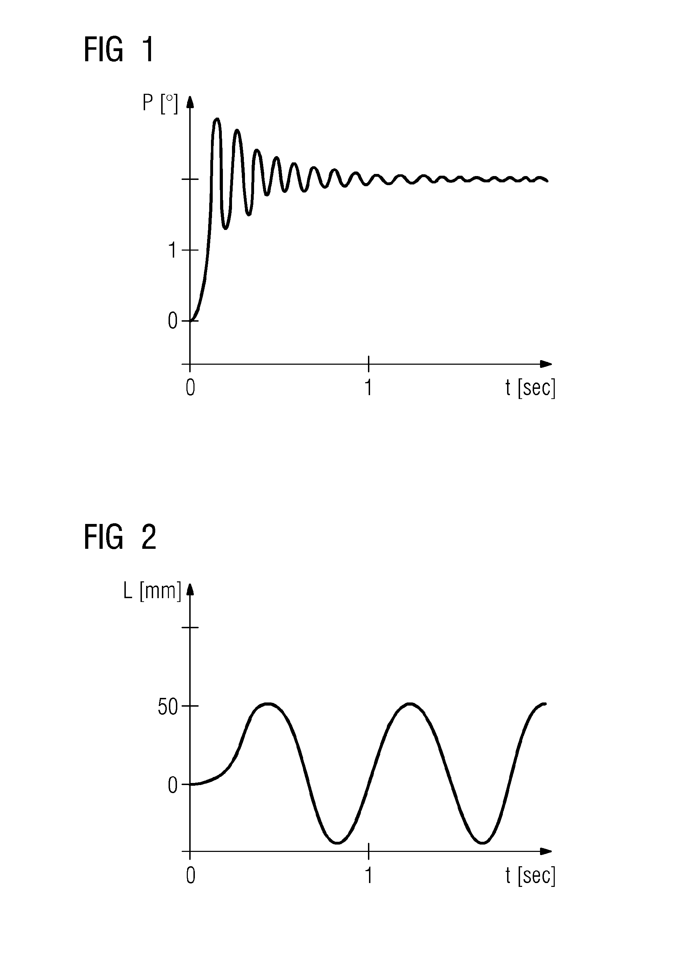

Die Pitchverstellung P und eine daraus resultierenden Flügelauslenkung L ist in den FIG 1 und 2 dargestellt. Es erfolgt eine dynamische Verstellung des Pitchwinkels um ca. 2° für eine Turmschattenkompensation. Ohne Optimalsteuerung wird der Flügel 1 einerseits zu Torsionsschwingungen mit ca. 10 Hz angeregt, siehe FIG 1. Andererseits wird der Flügel 1 zu Biegeschwingungen angeregt, die auch als Flügelschlag bezeichnet werden. Diese Biegeschwingungen weisen eine Frequenz von ca. 1 Hz auf, siehe FIG 2. Die Schwingungen erfolgen mit sehr großen Amplituden, so dass die mechanische Struktur des Flügels 1 und der Verbindungselemente 2 stark belastet wird. Ursache für das Auftreten derart starker Schwingungen sind zum einen die verkoppelten Moden (Flügelschlag und Torsion) sowie zum anderen die relativ große Nachgiebigkeit des Flügels 1. Aufgrund der fortlaufenden Wiederholung bei der Turmschattenkompensation kann dies schnell zur Ermüdung des Materials und damit zu den bekannten Schäden, wie beispielsweise Ermüdungsbrüchen führen.

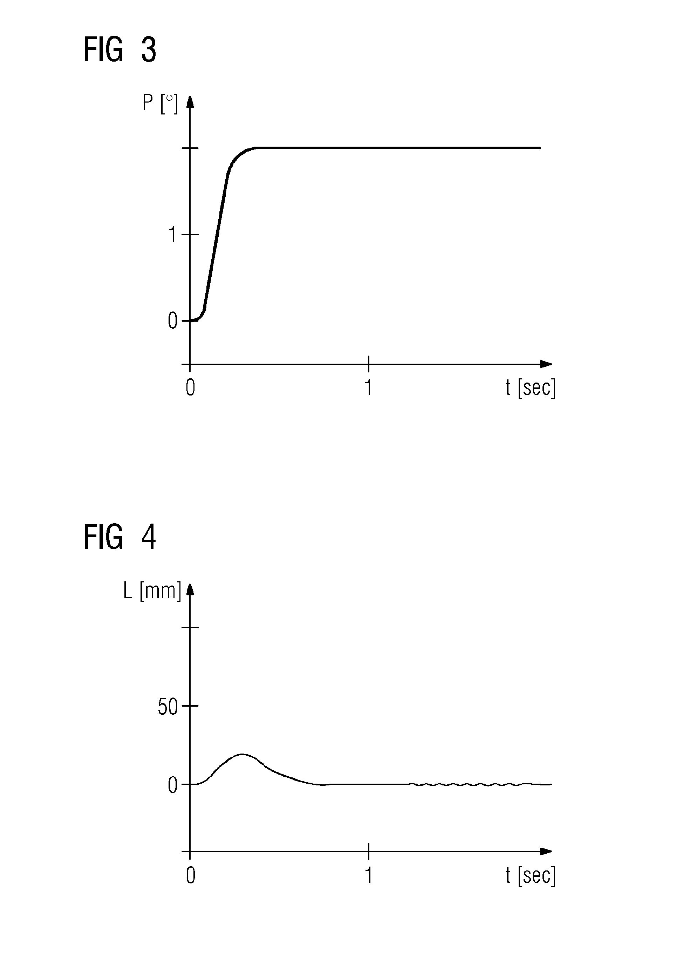

Um die Anregung derartiger Schwingungen zu verhindern, erfolgt die Pitchverstellung erfindungsgemäß unter Anwendung optimierter Sollwertverläufe, insbesondere Geschwindigkeitsverläufe, die mit Hilfe eines Optimalsteuerungsverfahrens berechnet wurden. Beispielsweise wird der Sollwertverlauf derart berechnet, dass die Torsionsfrequenz von ca. 10 Hz und die Frequenz des Flügelschlags mit ca. 1 Hz durch die Verstellung des Pitchwinkels nicht angeregt werden. Der Verstellvorgang des Pitchwinkels mit dem optimierten Sollwertverlauf ist in FIG 3 dargestellt. Sowohl die Torsionsschwingung, siehe FIG 3, als auch die Biegeschwingung des Flügels 1, siehe FIG 4, werden dadurch nicht mehr angeregt.

Die mit Hilfe des Optimalsteuerungsverfahrens für verschiedene Umlaufdrehzahlen berechneten Sollwertverläufe der Pitchwinkelverstellung werden in einem Speicher der Recheneinheit 7 abgelegt, In Abhängigkeit von der aktuellen Umlaufdrehzahl des Rotors wird während des Betriebs der Windkraftanlage ein passender Sollwertverlauf aus dem Speicher ausgelesen und dem Steuergerät 6 zur Verfügung gestellt. Das Steuergerät 6 steuert unter Verwendung dieses Sollwertverlaufes den Motor 4. Dem Fachmann sind verschiedene Möglichkeiten bekannt, der Recheneinheit 7 zum Zweck der Steuerung und/oder zur "Online"-Berechnung eines Sollwert verlaufes aktuelle Daten über den Pitchwinkel, Windgeschwindigkeit und/oder Position des Flügels 1 usw. zu übermitteln.

Ein wesentlicher Vorteil bei einer Pitchverstellung mit Optimalsteuerung ist eine deutliche Verringerung der Schwingungsanfälligkeit der Flügel. Damit wird die mechanische Struktur weniger belastet. Im Ergebnis erhöht sich die Lebensdauer der Windkraftanlagen deutlich. Aufgrund der geringeren Belastung besteht zudem ein deutlich geringeres Risiko, dass Risse oder Brüche der mechanischen Struktur auftreten, wodurch nicht zuletzt auch die Sicherheit im unmittelbaren Umfeld solcher Windkraftanlagen erhöht wird.

Vorzugsweise wird im Rahmen der Turmschattenkompensation der Pitchwinkel in Abhängigkeit von der Rotorblattumlaufdrehzahl hochdynamisch angepasst. Damit wird eine aktive Schwingungsbedämpfung der Windturbine verwirklicht. Vorteilhafterweise ist hierzu der Pitchantrieb als getriebeloser Direktantrieb ausgeführt. Die Rotorblattverstellung erfolgt mit anderen Worten über einen getriebelosen Direktantrieb.

Obwohl die Erfindung im Detail durch das bevorzugte Ausführungsbeispiel näher illustriert und beschrieben wurde, so ist die Erfindung nicht auf die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Steuerung eines motorischen Antriebs zum Verstellen des Pitchwinkels eines Rotorblattes einer Windkraftanlage zum Zweck der Turmschattenkompensation, **dadurch gekennzeichnet, dass** mit Hilfe eines Optimalsteuerungsverfahrens die Sollwertverläufe der Pitchwinkelverstellung ermittelt werden derart, dass das Rotorblatt möglichst wenig zu Schwingungen angeregt wird.

2. Verfahren nach Anspruch 1, **dadurch gekennzeichnet, dass** mit Hilfe des Optimalsteuerungsverfahrens Sollwertverläufe der Pitchwinkelverstellung zugleich derart angepasst werden, dass die Pitchwinkelverstellung schnellstmöglich erfolgt.

3. Verfahren nach Anspruch 1 oder 2, **dadurch gekennzeichnet, dass** mit Hilfe des Optimalsteuerungsverfahrens Sollwertverläufe der Pitchwinkelverstellung zugleich derart angepasst werden, dass die Umlaufdrehzahl des Rotors möglichst konstant bleibt.

4. Verfahren nach einem der Ansprüche 1 bis 3, **dadurch gekennzeichnet, dass** mit Hilfe des Optimalsteuerungsverfahrens Sollwertverläufe der Pitchwinkelverstellung zugleich derart angepasst werden, dass die am Pitchlager des Rotorblattes wirkenden Kräfte möglichst konstant sind.

5. Verfahren nach einem der Ansprüche 1 bis 4, **dadurch gekennzeichnet, dass** mit Hilfe des Optimalsteuerungsverfahrens Sollwertverläufe der Pitchwinkelverstellung zugleich derart angepasst werden, dass die am Lager des Rotors wirkenden Kräfte möglichst konstant sind.

6. Verfahren nach einem der Ansprüche 1 bis 5, **dadurch gekennzeichnet, dass** das Optimalsteuerungsverfahren mit der Umlaufdrehzahl des Rotors als veränderlichem Parameter durchgeführt wird.

7. Verfahren nach Anspruch 6, **dadurch gekennzeichnet, dass** mit Hilfe des Optimalsteuerungsverfahrens Sollwertverläufe der Pitchwinkelverstellung für verschiedene Umlaufdrehzahlen berechnet und in einem Speicher abgelegt werden und dass in Abhängigkeit von der aktuellen Umlaufdrehzahl ein passender Sollwertverlauf aus dem Speicher ausgelesen und einem Antriebssteuergerät der Windkraftanlage zur Verfügung gestellt wird.

8. Antriebssteuergerät (6), eingerichtet zur Durchführung eines Verfahrens nach einem der Ansprüche 1 bis 7, mit einer Recheneinheit.

9. Windkraftanlage, bei der jedes Rotorblatt (1) einen motorischen Antrieb (3) zum Verstellen des Pitchwinkels des Rotorblattes (1) aufweist, mit wenigstens einem Antriebssteuergerät (6) nach Anspruch 8.

10. Computerprogramm (8) mit Computerprogrammanweisungen zum Ermitteln von Sollwertverläufen gemäß einem Verfahren nach einem der Ansprüche 1 bis 7, wenn das Computerprogramm (8) in einem Computer oder einer entsprechenden Recheneinheit, insbesondere einer Recheneinheit (7) in einem Antriebssteuergerät (6) nach Anspruch 8, ausgeführt wird.
